(19) Europäisches Patentamt
European Patent Office
Office européen des brevets

(11) **EP 1 431 776 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(51) Int Cl.:
*G01S 13/93* (2006.01)     *G01S 13/58* (2006.01)
*G01S 13/86* (2006.01)

(21) Anmeldenummer: **03024219.2**

(22) Anmeldetag: **22.10.2003**

(54) **Verfahren zur Bestimmung der Länge eines Objektes mittels Radar**

Method for the determination of the length of an object with a radar system

Procédé pour déterminer la longueur d'un objet avec un système radar

(84) Benannte Vertragsstaaten:
**AT BE BG CH CY CZ DE DK EE ES FI FR GB GR HU IE IT LI LU MC NL PT RO SE SI SK TR**

(30) Priorität: **21.12.2002 DE 10260434**

(43) Veröffentlichungstag der Anmeldung:
**23.06.2004 Patentblatt 2004/26**

(73) Patentinhaber: **Volkswagen Aktiengesellschaft**
**38436 Wolfsburg (DE)**

(72) Erfinder:
• **Meinecke, Marc-Michael, Dr.**
**38524 Sassenburg (DE)**
• **Behrens, Marc**
**38106 Braunschweig (DE)**
• **Mende, Ralph, Dr.**
**38102 Braunschweig (DE)**

(74) Vertreter: **Patentanwälte Bressel und Partner**
**Radickestrasse 48**
**12489 Berlin (DE)**

(56) Entgegenhaltungen:
**EP-A- 0 773 452         EP-A- 1 031 851**
**EP-A- 1 094 336         US-A- 4 985 705**
**US-A- 5 717 390         US-B1- 6 434 472**

**Beschreibung**

Die Erfindung betrifft ein Verfahren zur Bestimmung der Länge von Objekten des Straßenverkehrs, insbesondere von PKW, LKW, Bussen, Krafträdern, Fahrrädern und Fußgängern, bei dem von einem Fahrzeug Radarsignale ausgesendet werden, bei dem die Radarsignale von einem zu messenden Objekt reflektiert werden, bei dem die reflektierten Radarsignale im Fahrzeug empfangen werden, bei dem die Frequenzspektren der reflektierten Radarsignale ausgewertet werden, und bei dem die in den Frequenzspektren enthaltenen Reflexionsspitzen ermittelt werden.

Darüber hinaus betrifft die Erfindung eine Vorrichtung zur Bestimmung der Länge eines Objektes des Straßenverkehrs, mit einem Radarsignale aussendenden und empfangenden Radarsensor, mit einer ein Frequenzspektrum der empfangenen Radarsignale ermittelnden Frequenzanalyseeinrichtung, und mit einer in dem Frequenzspektrum enthaltene Reflexionsspitzen ermittelnden Detektionseinrichtung.

Heutige Fahrerassistenzsysteme arbeiten häufig mit Radarsensoren. Diese Radarsensoren werden heutzutage für Entfernungsmessungen sowie zur Bestimmung von Relativgeschwindigkeiten von beobachteten Objekten eingesetzt. Auch kann mit herkömmlichen Radarsensoren der Azimutwinkel, unter dem ein Objekt beobachtet wird, bestimmt werden.

In der EP 1094336 A1 ist eine Vorrichtung zur Erkennung von Objekten beschrieben, die eine Radarsignale aussendende und empfangende Sensoreinrichtung sowie eine Auswerteeinrichtung umfasst. Die Sensoreinrichtung enthält eine Mehrzahl von Antennenelementen, die unter einem festgelegten Winkel die Radarsignale aussenden, so dass anhand der Zuordnung der reflektierten Signale zu einem bestimmten Antennenelement der Winkel zwischen dem Objekt und der Sensoreinrichtung ermittelbar ist. Des Weiteren werden die Reflexionssignale benachbarter Antennenelemente miteinander verglichen und anhand der Signalmuster festgestellt, ob die Strahlen vom gleichen Objekt reflektiert wurden. Hierzu wird die Breite des gesamten Frequenzbandes untersucht. Nachteilig hierbei ist, dass somit Signalanteile, die beispielsweise auf Rauschen zurückzuführen sind, mit erfasst werden und somit eine fehlerhafte Signalauswertung erfolgt.

Aus der US 5717390 ist ein System zur Mauterhebung bzw. Verkehrskontrolle bekannt, welches auf zwei Signalbrücken über der Fahrbahn, beispielsweise einer Autobahn, ortsfest installiert ist. Hierbei werden Dopplersignale (= Geschwindigkeitssignale) von passierenden Fahrzeugen ausgewertet.

In der Druckschrift "Zum optimierten Sendesignalentwurf für Automobilradare", M.-M. Meinecke, Shaker Verlag 2001, ISBN 3-8265-9223-9 werden aktuelle und zukünftige Komfort- und Sicherheitssysteme für Automobile beschrieben. Des Weiteren werden verschiedene Radar-Sensortechniken mit ihren Eigenschaften dargestellt.

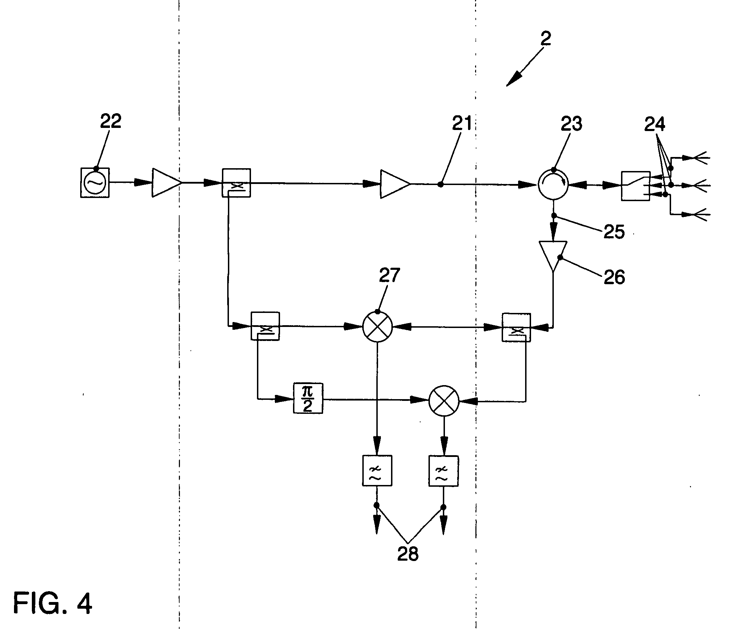

Häufig kommen linear frequenzmodulierte Dauerstrichradarsensoren (<u>L</u>inear <u>F</u>requency <u>M</u>odulated <u>C</u>ontinous <u>W</u>ave, LFMCW-Sensoren) zum Einsatz, deren prinzipieller Aufbau in Figur 4 aufgezeigt wird. Mit Hilfe dieser Sensoren lassen sich sehr präzise Entfernungen bestimmen. Ein solcher LFMCW-Radarsensor ist durch seine Entfernungsauflösung $\Delta R$, seine maximale Reichweite $R_{max}$ und die Geschwindigkeiten $v_{rel,min}$ bis $v_{rel,max}$ gekennzeichnet. Die für die Sensoren relevanten Beziehungen der Radarparameter zu dem Sendesignal sind gegeben durch:

$$\Delta R = \frac{c}{2 f_{Hub,Radar}},$$

$$\Delta v = \frac{\lambda}{2 T_{Chirp,Radar}}$$

wobei das Radarsignal aus einer Sequenz von linearen Chirps (linear frequenzmodulierte Sendesignale) mit unterschiedlichen Steigungen bestehen kann. Darüber hinaus wird das Radarsignal mit einem bestimmten Frequenzhub moduliert. Die Steigung $m_i$ eines einzelnen Chirps i wird definiert durch

$$m_i = \frac{f_{Hub,Chirp}}{f_{Hub,Radar}}$$

Die Radarchirps werden von beobachteten Objekten reflektiert. Die reflektierten Radarchirps stellen sich im Empfänger im Frequenzspektrum, beispielsweise bei einer FFT-Analyse, als Frequenzspitzen (Peaks) dar. Dabei spezifiziert die Position des Peaks die Zielkoordinaten in Entfernung bzw. Geschwindigkeit des beobachteten Objekts.

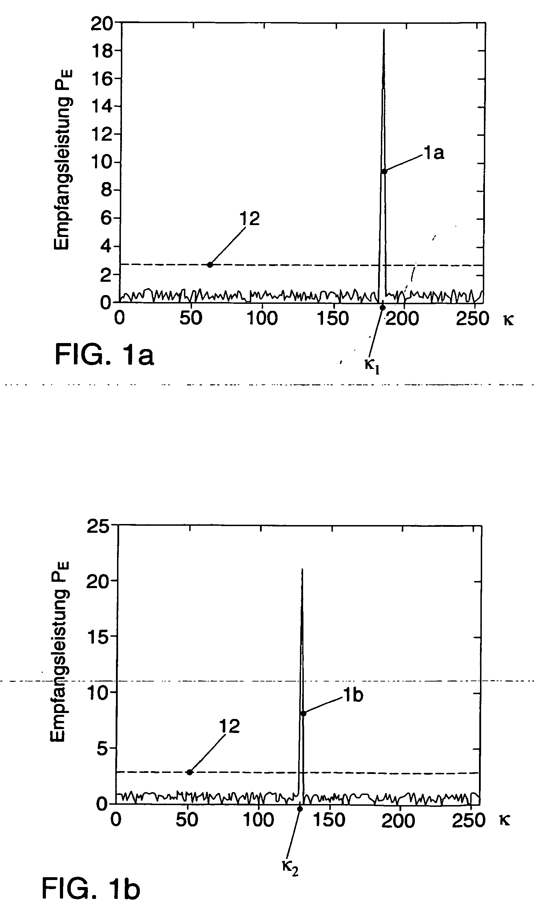

In Figur 1 ist exemplarisch ein Frequenzspektrum eines typischen Punktziels dargestellt. In diesem Beispiel befindet sich ein Objekt in einer Entfernung von R=100m und hat eine Relativgeschwindigkeit von v=20 m/s. Bei einem Modulationshub von $f_{Hub,Radar}$=150 MHz und einer Messzeit von $T_{Chirp,Radar}$=2,5 ms ergibt sich das in Figur 1a gezeigte Spektrum für einen Upchirp (linear frequenzhochmoduliertes Sendesignal) und in Figur 1b für einen Downchirp. Wie aus den Figuren zu erkennen ist, befinden sich die Frequenzspitzen 1 bei den Frequenzen $\kappa_1$=185 (Figur 1a) und $\kappa_2$=129 (Figur 1b).

Die Information eines einzelnen Chirps ist mehrdeutig und schränkt die Zielkoordinaten desjenigen Ziels lediglich bezüglich der Freiheitsgrade ein und es gilt

$$v_{rel,j} = \frac{-\Delta v}{\Delta R} * m_1 * R_j + \Delta v * \kappa_1$$

wobei $m_1$ die normierte Steigung des Chirps 1 darstellt und $\kappa_1$ (Kappa) die im Spektrum 1 (siehe Figur 1a) zugehörige gemessene normierte Frequenz ist.

Um die Mehrdeutigkeit aufzuheben, können beispielsweise mehrere Chirps unterschiedlicher Steigung genutzt werden, um eine eindeutige Messung im Schnittpunkt ihrer Geraden zu erreichen.

Die Berechnung der Schnittpunkte im Entfernungs-Relativgeschwindigkeitsdiagramm (R-$v_{rel}$-Diagramm) erfolgt durch die Berechnung aller idealer Kreuzpunkte aller Geraden aus den Up- und Downchirps aus allen gefundenen Frequenzpositionen $\kappa_1$ (zugehörige gemessene normierte Frequenz aus Spektrum 1 von Chirp 1) und $\kappa_2$ (zugehörige gemessene normierte Frequenz aus Spektrum 2 von Chirp 2) nach der Beziehung:

$$R_i = \Delta R \frac{\kappa_2 - \kappa_1}{m_1 - m_2},$$

$$v_{rel,i} = \Delta v \frac{m_1 \kappa_2 - m_2 \kappa_1}{m_1 - m_2}$$

Auch ist es möglich, dass zur Verbesserung der Ergebnisse weitere lineare Chirps ausgewertet werden. Weiterhin ist es möglich, Messungen beispielsweise nach dem Linear Frequency Modulated Shift Keying (LFMSK-Verfahren, siehe Zum optimierten Sendesignalentwurf für Automobilradare", M.-M. Meinecke) oder dem Frequency Shift Keying FSK-Verfahren oder nach Pulsradartechniken durchzuführen. Auch andere Verfahren sind denkbar.

Bei den beschriebenen Verfahren ist aber lediglich eine Bestimmung der Entfernung und der Relativgeschwindigkeit zwischen Messfahrzeug und zu messendem Objekt möglich. Es kann jedoch ebenfalls erforderlich sein, die Größe, d.h. auch die Länge eines beobachteten Objektes zu kennen. Daher liegt der vorliegenden Erfindung die Aufgabe zugrunde, eine Vorrichtung und ein Verfahren zur Längenmessung eines Objektes mit Hilfe bekannter Radarsensoren aus einem Fahrzeug heraus derart weiterzubilden, dass die Länge des Objektes mit hoher Genauigkeit ermittelbar ist.

Diese Aufgabe wird durch die in den unabhängigen Ansprüchen angegebenen Merkmale gelöst. Vorteilhafte Weiterbildungen der Erfindung sind in den Unteransprüchen angegeben.

Dieses zuvor hergeleitete technische Problem wird erfindungsgemäß derart gelöst, dass die Breite der Reflexionsspitzen, die über einer festgelegten Entscheidungsschwelle und/oder Amplitude liegen, ermittelt wird, und dass mit Hilfe der ermittelten Breite die Länge des zu messenden Objektes bestimmt wird, wobei die Länge (L) proportional zu der ermittelten Breite (14a, 14b) ist.

Bei einem länglich ausgedehnten Objekt weisen die reflektierten Radarsignale Subreflektionszonen auf, die nach der Art eines Plateaus ausgedehnt sind. Die Aufweitung des Spektrums eines Radar-Chirps erlaubt Rückschlüsse auf die Länge eines beobachteten Objektes, wobei die Auswertung der Aufweitung des Spektrums erfindungsgemäß vorgeschlagen wird. Fahrzeuge und andere räumlich ausgedehnte Objekte zeigen sich im Radarspektrum nicht mehr als isolierte Peaks, wie dies bei Punktzielen der Fall ist, sondern als mehr oder weniger weit ausgedehnte Plateaus. Durch Auswertung dieser Plateaus ist es erstmalig möglich, auch die Länge eines beobachteten Objektes aus einem bewegten Fahrzeug heraus bestimmen zu können, wobei sich das beobachtete Objekt ebenfalls bewegen darf.

Eine gute Auswertung der reflektierten Radarempfangssignale ergibt sich, wenn vom Fahrzeug ein Radar-Chirp als Radarsendesignal ausgesendet wird. Analog können bei Pulsradartechniken Längenmessungen durch Auswertung der Entfernungstore (feste Entfernungsraster, range gate) vorgenommen werden.

Da die Breite des Plateaus proportional zu der radialen Ausdehnung des Objektes ist, wird vorgeschlagen, dass die Länge L des zu messenden Objektes aus der Entfernungsauflösung $\Delta R$ des Radar-Chirps und der Breite der Reflexionsspitze $\Delta\kappa$ nach der Formel $L = \Delta R \cdot \Delta\kappa$ ermittelt wird. Diese Beziehung erlaubt eine einfache und schnelle Berechnung der radialen, also länglichen Ausdehnung vom Beobachtungsort des beobachteten Objektes und eignet sich daher sehr gut für eine kostengünstige Implementierung in ein Kfz-Radarsystem. Dies gilt sinngemäß für Pulsradartechniken, wobei sich die Längenberechnung in diesem Fall nach der Formel $L = \Delta R \cdot N$ ergibt. Die Anzahl der zusammenhängenden Entfernungstore, in denen eine Detektion erfolgt ist, wird hier mit N bezeichnet. Zur Präzisierung der Längenmessung können dabei zusätzlich Schätzalgorithmen zum Einsatz kommen, welche beispielsweise den Objektanfang und/oder das Objektende genauer feststellen.

Das empfangene Radar-Spektrum weist ein Grundrauschen auf. Dieses Grundrauschen soll bei der Bestimmung der Länge eines Objektes selbstverständlich keinen Einfluss haben. Um das Grundrauschen, welches nur eine sehr geringe Intensität hat, auszuschalten, wird vorgeschlagen, dass die Breite der Reflexionsspitzen bei einer bestimmten Amplitude bestimmt wird. Das hat zur Folge, dass nur Spitzen im Spektrum ausgewertet werden, die mit hoher Wahrscheinlichkeit aus einer Reflektion eines Radarchirps resultieren.

Eine komfortable Auswertung, insbesondere mit computerunterstützten Rechenverfahren, wird dadurch gewährleistet, dass die Frequenzspektren der reflektierten Radarsignale mit Hilfe einer Fast-Fourier-Transformation ermittelt werden.

Vorteilhaft ist, wenn die Radarsignale mit Hilfe linear frequenzmodulierter Dauerstrichradarsensoren erzeugt werden. Diese Dauerstrichradarsensoren haben den Vorteil, dass sie bereits in großen Mengen verfügbar sind und auch schon in vielen Fahrzeugen eingebaut werden.

Gemäß einer vorteilhaften Ausgestaltung, die bereits eigenständig auf einer Erfindung beruht, wird vorgeschlagen, dass bei zeitlich schnellen Veränderungen der Lage der Radarspitzen im Frequenzspektrum die Entfernung zwischen den Radarspitzen als Breite einer Reflexionsspitze interpretiert wird und mit Hilfe dieser Breite der Reflexionsspitze die Länge des zu messenden Objektes bestimmt wird. Schnelle Veränderungen der Lage der Radarspitzen, sogenannte Sprünge, treten bei Radarmessungen häufig auf. Es kann aber aufgrund der zeitlichen Veränderung ermittelt werden, ob diese Sprünge auf veränderten Koordinaten eines beobachteten Objektes beruhen, oder nicht. Für den Fall, dass diese Sprünge nicht mehr auf Fahrzeugbewegungen zurückzuführen sind, können die Koordinaten der einzelnen Peaks als Δ-Koordinaten für die Längenbestimmung genutzt werden.

Für sicherheitsrelevante (z. B. Precrash-Anwendungen) oder auch komfortorientierte (z. B. Abstandsregelsysteme) Applikationen im Kfz ist es häufig erforderlich, auch die Masse eines Objektes zu kennen, weshalb vorgeschlagen wird, dass zumindest mit Hilfe der ermittelten Länge des zu messenden Objektes sowie mit jeweils Standardobjektbreiten und/oder mit Standardobjekthöhen die Masse des Objektes geschätzt wird. Eine solche Schätzung kann beispielsweise auch mit Hilfe weiterer Sensorinformation, Objektinterpretation, Hypothesen oder anderen Techniken erfolgen.

In Precrash-Systemen ist es hilfreich, wenn mit Hilfe der ermittelten Masse des Objektes Fahrerassistenzsysteme angesteuert werden. Es ist auch sinnvoll, wenn mit Hilfe der ermittelten Masse des Objektes Insassenschutzeinrichtungen angesteuert werden oder wenn eine Schätzung der Kollisionsschwere vorhergesagt werden kann. Die Masse ist insbesondere bei der Abschätzung der Kollisionsschwere hilfreich, da hierdurch z.B. ein Airbag oder ein Gurtstraffer dosiert ausgelöst werden kann. Zur Bestimmung von einer realitätstreuen Objektkontur wird vorgeschlagen, dass mit Hilfe eines bildverarbeitenden Kamerasystems und/oder eines konturenvermessenden Lasersensors Objektflächen des zu messenden Objektes ermittelt werden. Damit lassen sich vorliegende Daten verifizieren, verfeinern und/oder besser aufeinander abstimmen und/oder eine wirklichkeitsnähere Interpretation der Verkehrsszene erzielen.

Ein weiterer Gegenstand der Erfindung, mit dessen Hilfe das erfindungsgemäße technische Problem ebenfalls gelöst wird, ist eine Vorrichtung zur Bestimmung der Länge eines Objektes des Straßenverkehrs, insbesondere mit einem vorher beschriebenen Verfahren, das dadurch gekennzeichnet ist, dass die Detektionseinrichtung zur Ermittlung der Breite der Reflexionsspitzen, die über einer festgelegten Entscheidungsschwelle und/oder Amplitude liegen, ausgebildet ist, und dass eine Längenberechnungseinrichtung vorgesehen ist, die ausgebildet ist, die Länge des zu messenden Objektes mit Hilfe der ermittelten Breite der Reflexionsspitzen zu bestimmen, wobei die Länge (L) proportional zu der ermittelten Breite (14a, 14b) ist. Dadurch können beispielsweise Einrichtungen für den Insassenschutz gezielt angesteuert werden, da eine Unfallfolgenabschätzung möglich wird.

Im Folgenden wird die Erfindung anhand einer ein Ausführungsbeispiel zeigenden Zeichnung näher erläutert. In der Zeichnung zeigen:

Fig. 1     ein Frequenzspektrum eines Punktziels;

Fig. 2     eine exemplarische erfindungsgemäße Radaranordnung im Einsatz für ein Kraftfahrzeug;

Fig. 3     ein Frequenzspektrum eines ausgedehnten Ziels und

Fig. 4     ein prinzipieller Aufbau eines Sende-/Empfangs-Moduls mit linear frequenzmodulierten Sendesignalen.

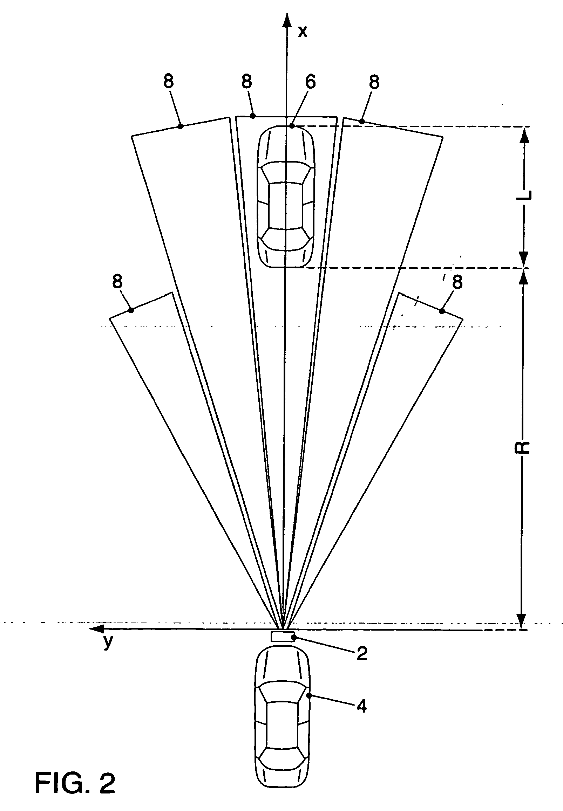

In Figur 2 ist eine Radarkeule 8 eines Radarsensors 2 schematisch gezeigt, welcher als Sender und Empfänger ausgebildet ist. Der Radarsensor 2 strahlt, dargestellt in der x-y Ebene, Radarsignale aus. Der Radarsensor 2 ist an einem Fahrzeug 4 angeordnet. Mit Hilfe des Radarsensors 2 wird ein zu beobachtendes Fahrzeug 6 erfasst. Das zu beobachtende Fahrzeug 6 ist in einer Entfernung R vom Fahrzeug 4 entfernt und hat eine radial zum Sensorursprung gemessene Ausdehnung L. Um das zu beobachtende Fahrzeug 6 erfassen zu können, werden Radar-Chirps vom Radarsensor 2 ausgesendet. Die Radar-Chirps werden vom zu beobachtenden Fahrzeug 6 reflektiert und im Sensor 2 empfangen. Die empfangenen Chirps können im Fahrzeug 2 ausgewertet werden und zur Bestimmung der radialen Ausdehnung L des zu beobachtenden Fahrzeugs 6 genutzt werden.

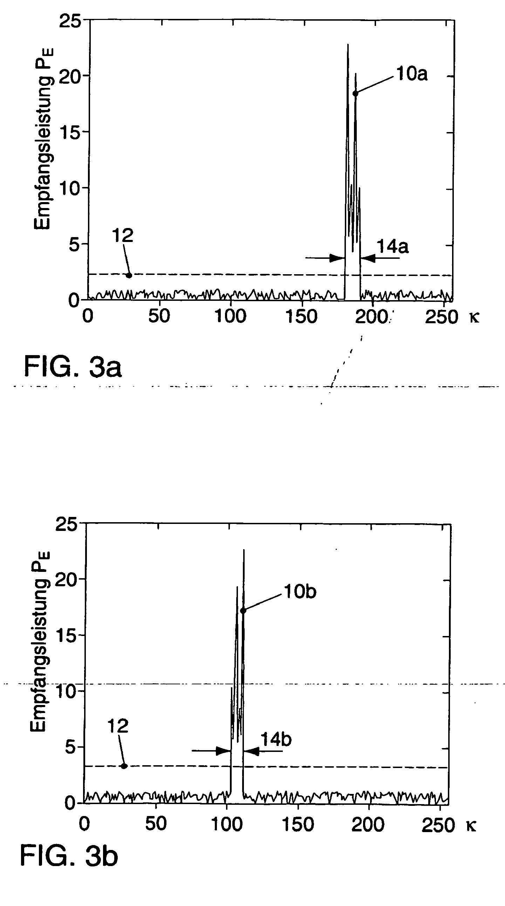

Die Bestimmung der radialen Ausdehnung wird in Figur 3 näher erläutert. In Figur 3a ist ein Spektrum eines Upchirps dargestellt und in Figur 3b das eines Downchirps. Das Spektrum weist zunächst ein Grundrauschen auf, welches durch die vielen kleinen Spitzen im Verlauf zu erkennen ist. Neben den Spitzen des Grundrauschens weist das Spektrum, wie in Figur 3 zu erkennen ist, einzelne Peaks 10 auf. Diese Peaks 10 liegen über einer vorher bestimmbaren Entscheidungsschwelle 12 (z. B. CFAR-Schwelle Constant False Alarm Rate), die zur Trennung von Zielmeldungen vom Rauschen vorgesehen ist.

Die Peaks 10a, 10b haben eine Breite 14a, 14b, welche mit Hilfe geeigneter Auswertemittel bestimmt werden kann. Diese Breite 14a, 14b der Peaks 10a, 10b kann dazu genutzt werden, die radiale Ausdehnung L des beobachteten Fahrzeugs zu bestimmen. Die Entfernungsauflösung ΔR des Sensors wird bestimmt durch den Frequenzhub eines Chirps. Neben der Entfernungsauflösung ΔR wird die Breite 14a, 14b (Δκ) der Peaks genutzt, um die Länge L des beobachteten Fahrzeugs bestimmen zu können. Die Länge lässt sich durch

$$L = \Delta R \,{}^{*}\Delta \kappa$$

bestimmen.

Dadurch, dass nun die Länge eines Fahrzeugs bekannt ist, kann dessen Masse mit weiteren Daten oder Annahmen geschätzt werden und diese dazu genutzt werden, um z.B. Precrash-Systeme anzusteuern oder die erkannten Objektdaten weiteren Fahrerassistenzsystemen über Datenverbindungen zur Verfügung zu stellen. Beispielsweise kann die Masse eines beobachteten Fahrzeugs geschätzt werden, was ein dosiertes Auslösen eines Gurtstraffers oder eines Airbags erlaubt.

Zur Realisierung eines Radarfrontends kann z. B. das in Figur 4 dargestellte Sende-/Empfangs-Modul 2 eingesetzt werden. Es besteht im Sendezweig 21 (Tx) im wesentlichen aus den zentralen Komponenten eines steuerbaren Oszillators 22 (VCO), eines Zirkulators 23 zur Sende-/Empfangssignaltrennung und den Antennen 24 mit zugehörigen Antennenschaltern. Im Empfangszweig 25 (Rx) befindet sich nach dem rauscharmen Verstärker 26 ein Quadraturdemodulator 27, der die HF-Signale e (t) ins Basisband 28 zweikanalig mischt. Das Basisbandsignal 28 m (t) ist daher in diesem beispielhaften Aufbau komplex.

## BEZUGSZEICHENLISTE

| | |
|---|---|
| 1 | Reflexionsspitze |
| 2 | Radarsensor |
| 4 | Fahrzeug |
| 6 | beobachtetes Fahrzeug |
| 8 | Radarkeule |
| 10 | Peak |
| 12 | Entscheidungsschwelle |
| 14 | Breite eines Peaks |
| R | Entfernung |
| L | radiale Ausdehnung |
| 21 | Sendzweig |
| 22 | Oszillator |
| 23 | Zirkulator |
| 24 | Antenne |
| 25 | Empfangszweig |
| 26 | Verstärker |
| 27 | Quadraturdemodulator |
| 28 | Basisbandsignal |

## Patentansprüche

1. Verfahren zur Bestimmung der Länge (L) von Objekten (6) des Straßenverkehrs, insbesondere von PKW, LKW, Bussen, Krafträdern, Fahrrädern und Fußgängern,

   - bei dem von einem Fahrzeug (4) Radarsignale ausgesendet werden,
   - bei dem die Radarsignale von einem zu messenden Objekt (6) reflektiert werden,
   - bei dem die reflektierten Radarsignale im Fahrzeug (4) empfangen werden,
   - bei dem die Frequenzspektren der reflektierten Radarsignale ausgewertet werden, und
   - bei dem die in den Frequenzspektren enthaltenen Reflexionsspitzen (1a, 1b) ermittelt werden,

   **dadurch gekennzeichnet,**

   - **dass** die Breite (14a, 14b) der Reflexionsspitzen, die über einer festgelegten Entscheidungsschwelle und/oder Amplitude liegen, ermittelt wird, und
   - **dass** mit Hilfe der ermittelten Breite (14a, 14b) die Länge (L) des zu messenden Objektes (6) bestimmt wird, wobei die Länge (L) proportional zu der ermittelten Breite (14a, 14b) ist.

2. Verfahren nach Anspruch 1, **dadurch gekennzeichnet, dass** vom Fahrzeug (4) ein Radar-Chirp bei einem Continous Wave-Radar (CW-Radar) oder Pulse bei einem Pulsradarmessverfahren oder ein Frequency-Shift-Keying (FSK)-Sendesignal als Radarsendesignal ausgesendet wird.

3. Verfahren nach einem der Ansprüche 1 oder 2, **dadurch gekennzeichnet, dass** die Länge (L) des zu messenden Objektes (6) aus der Entfernungsauflösung ΔR des Radar-Chirps und der Breite (14a, 14b) der Reflexionsspitze (10a, 10b) Δκ nach der Formel $L = \Delta R \cdot \Delta \kappa$ ermittelt wird.

4. Verfahren nach einem der Ansprüche 1 bis 3, **dadurch gekennzeichnet, dass** bei einem CW-Radar die Frequenzspektren der reflektierten Radarsignale mit Hilfe einer Fast-Fourier-Transformation ermittelt werden oder dass bei einem Pulsradar die Anzahl der Entfernungstore deren Empfangsleistung über der Entscheidungsschwelle (12) liegen, vermessen werden.

5. Verfahren nach einem der Ansprüche 1 bis 4, **dadurch gekennzeichnet, dass** die Radarsignale mit Hilfe linear frequenzmodulierter Dauerstrichradarsensoren und/oder von Pulsradarsensoren und/oder von FSK-artig modulierten Sensoren erzeugt werden.

6. Verfahren nach einem der Ansprüche 1 bis 5, **dadurch gekennzeichnet, dass** zumindest mit Hilfe der ermittelten Länge (L) des zu messenden Objektes (6) die Masse des Objektes geschätzt wird.

7. Verfahren nach Anspruch 6, **dadurch gekennzeichnet, dass** die ermittelte Masse des Objektes Fahrerassistenzsystemen bereitgestellt wird.

8. Verfahren nach Anspruch 6 oder 7, **dadurch gekennzeichnet, dass** mit Hilfe der ermittelten Masse oder Länge des Objektes in die Fahrdynamik eingegriffen wird oder Schutzeinrichtungen, insbesondere Insassenschutzeinrichtungen oder Fußgängerschutzeinrichtungen, angesteuert werden.

9. Verfahren nach einem der Ansprüche 6 bis 8, **dadurch gekennzeichnet, dass** mit Hilfe der ermittelten Masse des Objektes eine geschätzte Kollisionsschwere ermittelt wird.

10. Verfahren nach einem der Ansprüche 1 bis 9, **dadurch gekennzeichnet, dass** mit Hilfe eines bildverarbeitenden Kamerasystems und/oder eines konturenvermessenden Lasersensors eine Objektkontur des zu messenden Objektes ermittelt wird.

11. Vorrichtung zur Bestimmung der Länge (L) eines Objektes (6) des Straßenverkehrs, insbesondere mit einem Verfahren nach einem der Ansprüche 1 bis 10,

   - mit einem Radarsignale aussendenden und empfangenden Radarsensor (2),
   - mit einer ein Frequenzspektrum der empfangenen Radarsignale ermittelnden Frequenzanalyseeinrichtung, und
   - mit einer in dem Frequenzspektrum enthaltene Reflexionsspitzen (10a, 10b) ermittelnden Detektionseinrichtung,

   **dadurch gekennzeichnet,**

   - **dass** die Detektionseinrichtung zur Ermittlung der Breite (14a, 14b) der Reflexionsspitzen, die über einer festgelegten Entscheidungsschwelle und/oder Amplitude liegen, ausgebildet ist, und
   - **dass** eine Längenberechnungseinrichtung vorgesehen ist, die ausgebildet ist, die Länge (L) des zu messenden Objektes (6) mit Hilfe der ermittelten Breite (14a, 14b) der Reflexionsspitzen (10a, 10b) zu bestimmen, wobei die Länge (L) proportional zu der ermittelten Breite (14a, 14b) ist.

**Claims**

1. Method for determination of the length (L) of objects (6) in road traffic, in particular passenger vehicles, goods vehicles, buses, motor cycles, cycles and pedestrians,

   - in which radar signals are transmitted from a vehicle (4),
   - in which the radar signals are reflected from an object (6) to be measured,
   - in which the reflected radar signals are received in the vehicle (4),
   - in which the frequency spectra of the reflected radar signals are evaluated, and
   - in which the reflection peaks (1a, 1b) contained in the frequency spectra are determined,

   **characterized**

   - **in that** the width (14a, 14b) of the reflection peaks which are located above a defined decision threshold and/or amplitude, is determined, and
   - **in that** the length (L) of the object (6) to be measured is determined with the aid of the determined width (14a, 14b), with the length (L) being proportional to the determined width (14a, 14b).

2. Method according to Claim 1, **characterized in that** the vehicle (4) transmits a radar chirp in the case of a continuous wave radar (CW radar), or pulses in the case of a pulse radar measurement method, or a frequency shift key (FSK) transmission signal as a radar transmission signal.

3. Method according to one of Claims 1 or 2, **characterized in that** the length (L) of the object (6) to be measured is determined from the range resolution $\Delta R$ of the radar chirp and the width (14a, 14b) of the reflection peak (10a, 10b) $\Delta\kappa$ using the formula $L = \Delta R \cdot \Delta\kappa$.

4. Method according to one of Claims 1 to 3, **characterized in that**, in the case of CW radar, the frequency spectra of the reflected radar signals are determined with the aid of a Fast Fourier Transformation, or **in that**, in the case of a pulsed radar, the number of range gates whose reception power is above the decision threshold 12 are measured.

5. Method according to one of Claims 1 to 4, **characterized in that** the radar signals are produced with the aid of linearly frequency-modulated continuous-radar sensors and/or by pulsed radar sensors and/or by FSK-like modulated sensors.

**6.** Method according to one of Claims 1 to 5, **characterized in that** the mass of the object is estimated at least with the aid of the determined length (L) of the object 6 to be measured.

**7.** Method according to Claim 6, **characterized in that** the determined mass of the object is passed to driver assistance systems.

**8.** Method according to Claim 6 or 7, **characterized in that** driving dynamics actions are taken with the aid of the determined mass or length of the object, or protective devices, in particular occupant protective devices or pedestrian protective devices, are actuated.

**9.** Method according to one of Claims 6 to 8, **characterized in that** an estimated collision severity is determined with the aid of the determined mass of the object.

**10.** Method according to one of Claims 1 to 9, **characterized in that** an object contour of the object to be measured is determined with the aid of an image-processing camera system and/or a contour-measuring laser sensor.

**11.** Apparatus for determination of the length (L) of an object (6) in road traffic, in particular using a method according to one of Claims 1 to 10,

> - having a radar sensor (2) which transmits and receives radar signals,
> - having a frequency analysis device which determines a frequency spectrum of the received radar signals, and
> - having a detection device which determines reflection peaks (10a, 10b) contained in the frequency spectrum,

**characterized**

> - **in that** the detection device is designed to determine the width (14a, 14b) of the reflection peaks which are located above a defined decision threshold and/or amplitude, and
> - **in that** a length calculation device is provided, which is designed to determine the length (L) of the object (6) to be measured, with the aid of the determined width (14a, 14b) of the reflection peaks (10a, 10b), with the length (L) being proportional to the determined width (14a, 14b).

**Revendications**

**1.** Procédé pour déterminer la longueur (L) d'objets (6) de la circulation routière, notamment de voitures, de camions, de bus, de motocyclettes, de vélos et de piétons,

> - dans lequel des signaux radar sont émis par un véhicule (4),
> - dans lequel les signaux radar sont réfléchis par un objet à mesurer (6),
> - dans lequel les signaux radar réfléchis sont reçus dans le véhicule (4),
> - dans lequel les spectres de fréquences des signaux radar réfléchis sont traités, et
> - dans lequel les pics de réflexion (1a, 1b) contenus dans les spectres de fréquences sont déterminés,

**caractérisé en ce que**

> - on détermine la largeur (14a, 14b) des pics de réflexion qui se situent au-dessus d'un seuil de discrimination et/ou d'une amplitude définis, et
> - on définit la longueur (L) de l'objet à mesurer (6) à l'aide de la largeur déterminée (14a, 14b), la longueur (L) étant proportionnelle à la largeur déterminée (14a, 14b).

**2.** Procédé selon la revendication 1, **caractérisé en ce qu'**à partir du véhicule (4), on émet sous la forme de signal d'émission radar, un signal radar à compression d'impulsions dans le cas d'un radar à onde continue (CW-radar : Continous Wave-radar), ou des impulsions dans le cas d'un procédé de mesure radar à impulsions, ou d'un signal d'émission à codage par décalage de fréquence (FSK : Frequency-Shift-Keying).

**3.** Procédé selon une des revendications 1 ou 2, **caractérisé en ce que** la longueur (L) de l'objet à mesurer (6) est déterminée par la formule $L=\Delta R.\Delta K$ à partir de la résolution des distances $\Delta R$ de la compression d'impulsions du radar et de la largeur (14a, 14b) des pics de réflexion (10a, 10b) $\Delta K$.

**4.** Procédé selon une des revendications 1 à 3, **caractérisé en ce que** dans un radar CW, on détermine les spectres de fréquences des signaux radar réfléchis à l'aide d'une transformation de Fourier rapide ou **en ce que** dans un radar à impulsion, on mesure le nombre de fenêtres de distances dont la puissance de réception se situe au-dessus du seuil de discrimination (12).

**5.** Procédé selon une des revendications 1 à 4, **caractérisé en ce que** les signaux radar sont générés à l'aide de capteurs radar à émission continue modulés linéairement en fréquence, et/ou par des capteurs radar à impulsions et/ou par des capteurs modulés en mode de type FSK.

**6.** Procédé selon une des revendications 1 à 5, **caractérisé en ce qu'**on évalue la masse de l'objet au moins à l'aide de la longueur (L) déterminée de l'objet à mesurer (6).

**7.** Procédé selon la revendication 6, **caractérisé en ce que** la masse déterminée de l'objet est proposée aux systèmes d'assistance à la conduite.

**8.** Procédé selon la revendication 6 ou 7, **caractérisé en ce qu'**à l'aide de la masse ou de la longueur déterminée de l'objet, on intervient dans la dynamique de conduite ou on commande des installations de protection, notamment des installations de protection des occupants ou des installations de protection des piétons.

**9.** Procédé selon une des revendications 6 à 8, **caractérisé en ce qu'**à l'aide de la masse déterminée de l'objet on détermine une gravité estimée de la collision.

**10.** Procédé selon une des revendications 1 à 9, **caractérisé en ce qu'**à l'aide d'un système de caméra à traitement d'images et/ou d'un capteur laser mesurant les contours, on détermine un contour d'objet de l'objet à mesurer.

**11.** Dispositif pour déterminer la longueur (L) d'un objet (6) de la circulation routière, notamment avec un procédé selon une des revendications 1 à 10,

> - avec un capteur radar (2) émettant et recevant des signaux radar,
> - avec une installation d'analyse des fréquences déterminant un spectre de fréquences des signaux radar reçus, et
> - avec une installation de détection déterminant les pics de réflexion (10a, 10b) contenus dans le spectre de fréquences,

**caractérisé en ce que**

> - on configure l'installation de détection pour la détermination de la largeur (14a, 14b) des pics de réflexion qui se situent au-dessus d'un seuil de discrimination et/ou d'une amplitude définis, et **en ce que**
> - on prévoit une installation de calcul des longueurs qui est configurée pour déterminer la longueur (L) de l'objet à mesurer (6) à l'aide de la largeur déterminée (14a, 14b) des pics de réflexion (10a, 10b), la longueur (L) étant proportionnelle à la largeur déterminée (14a, 14b).

FIG. 1a

FIG. 1b

FIG. 2

FIG. 3a

FIG. 3b

FIG. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1094336 A1
- US 5717390 A